# EUROPEAN PATENT APPLICATION

(11) **EP 4 534 820 A2**
(43) Date of publication of application: **09.04.2025**
(21) Application number: 24204826.2
(22) Date of filing: 04.10.2024
(51) Int. Cl.: F02C 3/14

(54) **GAS TURBINE ENGINE WITH ENTRAINED PARTICLE SEPARATORS**

(30) Priority: 04.10.2023 US 202363542452 P
(71) Applicant: RTX Corporation, Farmington, CT 06032 (US)
(72) Inventor: MULDOON, Marc J., Marlborough, 06447 (US)
(74) Representative: Dehns

(57) **Abstract**

A turbine engine (20) is provided that includes compressor, combustor, and turbine sections (30, 32, 34), an outer casing (52), an inner diffuser case (60), a particle separator (58), and a mechanism (96) for producing an electrostatically charged surface. A diffuser outer diameter (OD) flow path (62) is disposed radially between the outer casing (52) and the combustor (35). A diffuser inner diameter (ID) flow path (64) is disposed radially between the combustor (35) and the inner diffuser case (60). The particle separator (58) is disposed in the diffuser OD and/or ID flow paths (62, 64). The particle separator (58) includes a housing (98) that extends between forward and aft ends (120). The particle separator (58) includes helical dividers (100), a collection pocket (110), an inlet aperture (106), and a plurality of exit apertures (108). Air flow enters the particle separator interior cavity (118) through the inlet aperture (106) and enters a first passage. The collection pocket (110) is in fluid communication with the first passage and is disposed to receive particulate matter entrained within the air flow.

## Description

### BACKGROUND OF THE INVENTION

### 1. Technical Field

The present disclosure relates to gas turbine engines in general and to gas turbine engine including entrained particle separation devices in particular.

### 2. Background Information

Debris entrained in air that is ingested into the core of a turbine engine negatively impacts the durability of cooled hot section components such as combustors and turbines. The debris may, for example, clog cooling passages and build up on impingement surfaces, reducing the efficiency of heat transfer. Air contamination primarily occurs at takeoff and landing due to the higher concentration of dirt particles near the ground. Once the dirt reaches the hottest part of the engine, in the combustor and the high pressure turbine, it tends to have a very small particle size because it has passed through the compressor. What is needed is an improved system for removing entrained articles from air passing within a turbine engine.

### SUMMARY

According to an aspect of the present disclosure, a turbine engine having an axial centerline is provided. The turbine engine includes a compressor section, a combustor section, an outer casing, an inner diffuser case, a turbine section, a particle separator, and a mechanism configured to produce an electrostatically charged surface on a portion of the particle separator. The combustor section has an annular combustor. The outer casing is disposed radially outside of and spaced apart from the annular combustor. A diffuser outer diameter (OD) flow path is disposed radially between the outer casing and the annular combustor. The inner diffuser case is disposed radially inside of and spaced apart from the annular combustor. A diffuser inner diameter (ID) flow path is disposed radially between the annular combustor and the inner diffuser case. The particle separator is disposed within at least one of the diffuser OD flow path or the diffuser ID flow path. The particle separator includes a housing having an interior cavity defined between an exterior wall and an interior wall. The housing extends between a forward end and an aft end. The particle separator further includes a plurality of helical dividers, at least one collection pocket, at least one inlet aperture, and a plurality of exit apertures. The helical dividers are disposed within the housing interior cavity. The particle separator is configured so that an air flow enters the particle separator interior cavity through the at least one inlet aperture and enters a first passage defined by a respective helical divider and the electrostatically charged surface before exiting through the exit apertures. The at least one collection pocket is in fluid communication with the first passage and is disposed to receive particulate matter entrained within the air flow.

In any of the aspects or embodiments described above and herein, the first passage may be defined by a first helical divider and the electrostatically charged surface, and the particle separator may include a second passage defined by a second helical divider and the housing interior wall or the housing exterior wall.

In any of the aspects or embodiments described above and herein, the housing exterior wall may be disposed radially outside of the housing interior wall.

In any of the aspects or embodiments described above and herein, the housing exterior wall and the housing interior wall may be concentric.

In any of the aspects or embodiments described above and herein, the first and second helical dividers each have an outer wall end and a distal end, and the respective outer wall ends of the first and second helical dividers are each connected to the housing exterior wall.

In any of the aspects or embodiments described above and herein, the at least one collection pocket may include a first collection pocket disposed adjacent the outer wall end of the second helical divider.

In any of the aspects or embodiments described above and herein, the distal end of the first said helical divider may be disposed radially inside of and spaced apart from the first collection pocket.

In any of the aspects or embodiments described above and herein, the distal end of the first said helical divider may be spaced apart from the housing interior wall.

In any of the aspects or embodiments described above and herein, the electrostatically charged surface may be at least a portion of the housing exterior wall.

In any of the aspects or embodiments described above and herein, the mechanism configured to produce an electrostatically charged surface may be in communication with a combustor igniter.

In any of the aspects or embodiments described above and herein, the first passage may be defined by a first helical divider and the electrostatically charged surface portion of the housing exterior wall, and the particle separator may include a second passage defined by a second helical divider and the housing interior wall.

In any of the aspects or embodiments described above and herein, one or more of the exit apertures may extend through the exterior wall.

In any of the aspects or embodiments described above and herein, one or more of the exit apertures may be disposed at the aft end of the housing.

In any of the aspects or embodiments described above and herein, the first passage may be defined by a first helical divider and the electrostatically charged surface portion of the housing interior wall, and the particle separator may include a second passage defined by a second helical divider and the housing exterior wall, and the housing exterior wall may be disposed radially outside of the housing interior wall.

In any of the aspects or embodiments described above and herein, the first and second helical dividers may each have an outer wall end and a distal end, and the respective outer wall ends of the first and second helical dividers may each be connected to the housing interior wall.

In any of the aspects or embodiments described above and herein, the at least one collection pocket may include a first collection pocket disposed adjacent the outer wall end of the second helical divider.

In any of the aspects or embodiments described above and herein, the first collection pocket may be in fluid communication with the first passage.

In any of the aspects or embodiments described above and herein, the distal end of the first helical divider may be disposed radially outside of and spaced apart from the first collection pocket.

According to an aspect of the present disclosure, a particle separator system configured for use within a combustor section of a turbine engine is provided. The system includes a particle separator and a mechanism configured to produce an electrostatically charged surface on a portion of the particle separator. The particle separator includes a housing, a plurality of helical dividers, at least one collection pocket, at least one inlet aperture, and a plurality of exit apertures. The housing has an interior cavity defined between an exterior wall and an interior wall. The housing extends between a forward end and an aft end. The helical dividers are disposed within the interior cavity. The collection pocket is disposed within the interior cavity. The particle separator is configured so that an air flow enters the particle separator interior cavity through the at least one inlet aperture and enters a first passage defined by a respective helical divider and the electrostatically charged surface before exiting through the exit apertures. The collection pocket is in fluid communication with the first passage and is disposed to receive particulate matter entrained within the air flow.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic sectional view of a gas turbine engine.
FIG. 2 is a diagrammatic partial view of a gas turbine engine embodiment.
FIG. 3 is a diagrammatic sectioned partial view of a gas turbine engine embodiment.
FIG. 4 is a diagrammatic sectioned partial view of a combustor wall assembly.
FIG. 5 is a diagrammatic end view showing particle separators and a combustor.
FIG. 6 is a diagrammatic illustration of a present disclosure particle separator embodiment.
FIG. 7 is a diagrammatic illustration of a present disclosure particle separator embodiment.
FIG. 8A is a partial view of the particle separator embodiment shown in FIG. 6.
FIG. 8B is a partial view of the particle separator embodiment shown in FIG. 7.
FIG. 9 is a diagrammatic view of an electrically conductive panel attached to a present disclosure particle separator housing wall.
FIG. 10 is a diagrammatic partial view of a gas turbine engine embodiment.

### DETAILED DESCRIPTION

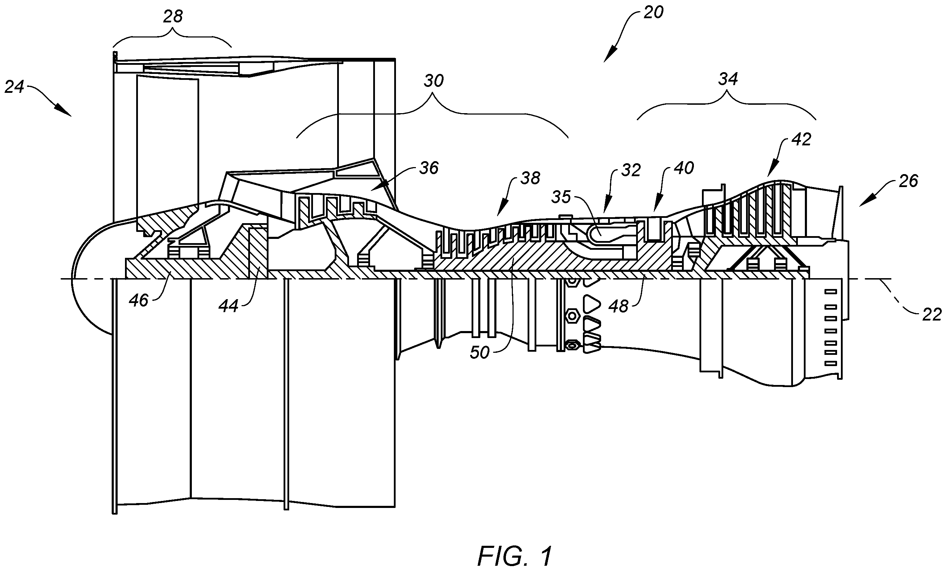

FIG. 1 shows a partially sectioned diagrammatic view of a geared gas turbine engine 20. The gas turbine engine 20 extends along an axial centerline 22 between an upstream air flow inlet 24 and a downstream air flow exhaust 26. The gas turbine engine 20 includes a fan section 28, a compressor section 30, a combustor section 32, and a turbine section 34. The combustor section 32 includes a combustor 35. The compressor section 30 includes a low pressure compressor (LPC) 36 and a high pressure compressor (HPC) 38. The turbine section 34 includes a high pressure turbine (HPT) 40 and a low pressure turbine (LPT) 42. The engine sections are arranged sequentially along the centerline 22. The fan section 28 is connected to a geared architecture 44, for example, through a fan shaft 46. The geared architecture 44 and the LPC 36 are connected to and driven by the LPT 42 through a low speed shaft 48. The HPC 38 is connected to and driven by the HPT 40 through a high speed shaft 50. The terms "forward", "leading", "aft, "trailing" are used herein to indicate the relative position of a component or surface. As core gas air passes through the engine 20, a "leading edge" of a stator vane or rotor blade encounters core gas air before the "trailing edge" of the same. In a conventional axial engine 20 such as that shown in FIG. 1, the fan section 28 is "forward" of the compressor section 30 and the turbine section 34 is "aft" of the compressor section 30. The terms "inner radial" and "outer radial" refer to relative radial positions from the engine centerline 22. An inner radial component or path is disposed radially closer to the engine centerline 22 than an outer radial component or path. The gas turbine engine 20 diagrammatically shown is an example provided to facilitate the description herein. The present disclosure is not limited to any particular gas turbine engine configuration.

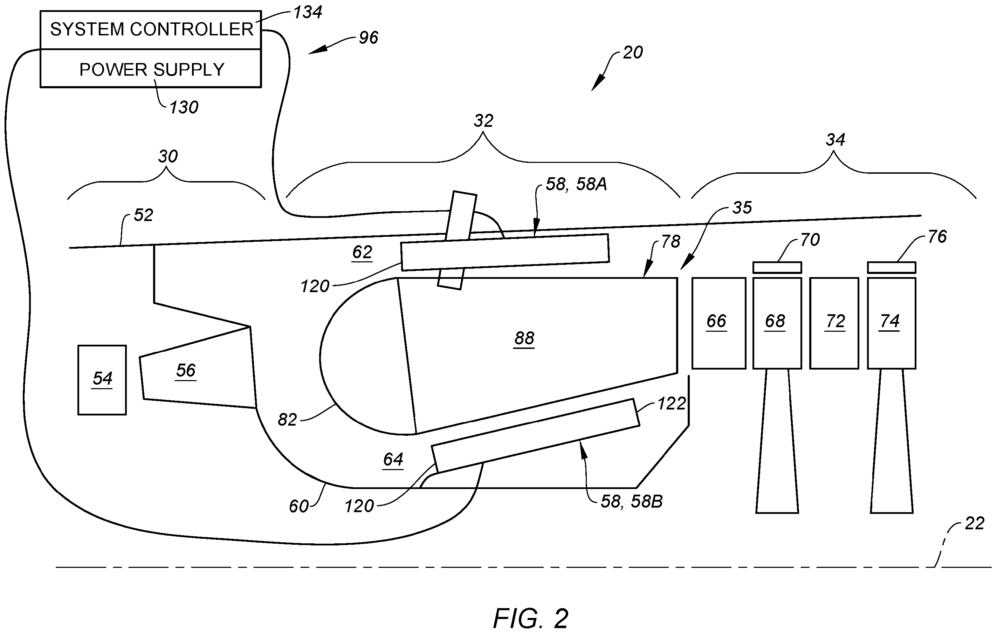

FIG. 2 is a diagrammatic partial view of a gas turbine engine 20 embodiment according to aspects of the present disclosure. The engine 20 shown in FIG. 2 includes a compressor section 30, a combustor section 32, and a portion of a turbine section 34. An outer casing 52 is disposed radially outside of the compressor section 30, the combustor section 32, and the turbine section 34. The compressor section 30 includes a compressor stator vane stage 54 and a compressor discharge 56. The combustor section 32 includes a combustor 35, a plurality of particle separators 58 and an inner diffuser case 60. A diffuser outer diameter (OD) flow path 62 is disposed radially between the combustor 35 and the outer casing 52. A diffuser inner diameter (ID) flow path 64 is disposed radially between the combustor 35 and the inner diffuser case 60. The embodiment shown diagrammatically in FIG. 2 illustrates particle separators 58 disposed within the diffuser OD flow path 62 and the diffuser ID flow path 64. The present disclosure does not require particle separators 58 in both the diffuser OD flow path 62 and the diffuser ID flow path 64. The turbine section 34 includes a first HPT stator vane stage 66, a first HPT rotor stage 68, a first HPT rotor stage blade outer air seal (BOAS) 70, a second HPT stator vane stage 72, a second HPT rotor stage 74, and a second HPT rotor stage BOAS 76.

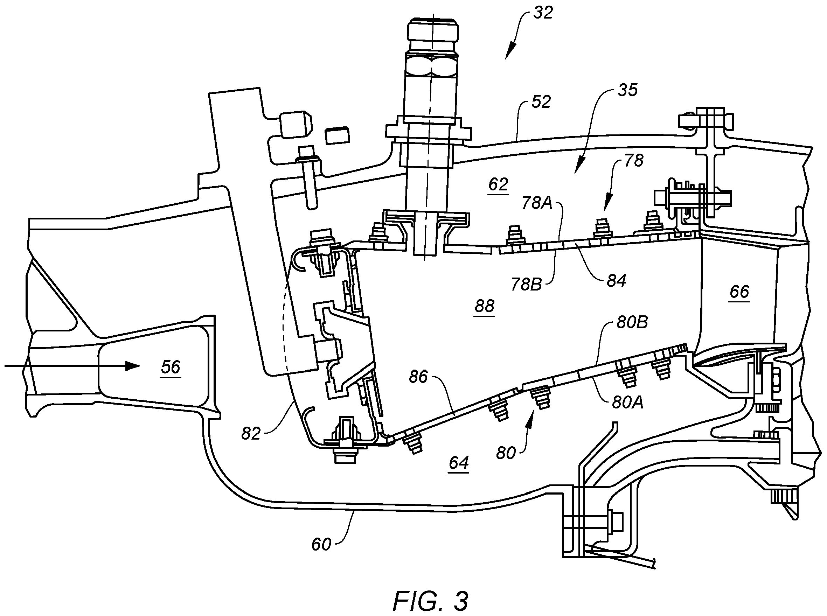

FIG. 3 diagrammatically illustrates a non-limiting example of a combustor 35 having an outer combustor wall assembly 78, an inner combustor wall assembly 80, and a bulkhead assembly 82. The outer combustor wall assembly 78 includes an outer support shell 78A that supports liner panels 78B mounted thereto. The liner panels 78B mounted on the outer support shell 78A form a cavity 84 therebetween. In similar fashion, the inner combustor wall assembly 80 includes an inner support shell 80A that supports liner panels 80B mounted thereto. The liner panels 80B mounted on the inner support shell 80A form a cavity 86 therebetween. The outer combustor wall assembly 78 and the inner combustor wall assembly 80 are spaced apart from one another to define an annular combustion chamber 88, with the liner panels forming a portion of the interior boundary of the combustion chamber 88. The bulkhead assembly 82 includes fuel nozzles circumferentially distributed around the annular combustor 35. The bulkhead assembly 82 may be attached to the inner and outer combustor wall assemblies 78, 80.

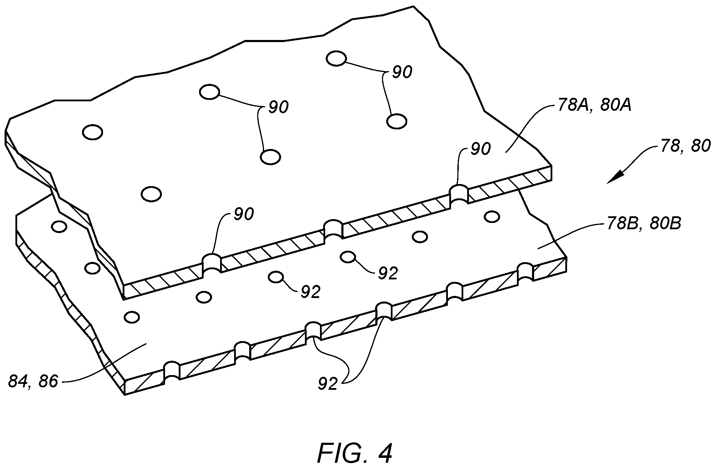

FIG. 4 diagrammatically illustrates a partial view of a generic support shell 78A, 80A, liner panel 78B, 80B, and a cavity 84, 86 disposed therebetween. The support shell 78A, 80A and liner panel 78B, 80B are representative of an outer or inner combustor wall assembly 78, 80. As can be seen in FIG. 4, the support shell 78A, 80A includes a plurality of apertures 90 configured to allow cooling air therethrough, and the liner panel 78B, 80B includes a plurality of apertures 92 configured to allow cooling air therethrough. As can also be seen in FIG. 4, the combustor wall assembly 78, 80 may include a plurality of dilution apertures 94 that provide an air passage through the combustor wall assembly 78, 80 to permit air to enter the combustion chamber 88 through the combustor wall assembly 78, 80 (e.g., from the diffuser OD flow path 62 or the diffuser ID flow path 64). The dilution apertures 94 typically have a diameter substantially larger than the cooling hole apertures 90, 92 disposed within the support shell 78A, 80A or liner panel 78B, 80B. The combustor 35 shown in FIG. 3 and the generic combustor wall assembly 78, 80 shown in FIG. 4 are examples used to illustrate the present disclosure and the present disclosure is not limited thereto.

As stated above, debris (e.g., particles) entrained in air that is ingested into the core of a turbine engine 20 may negatively impact the durability of components within the combustor section 32 and the turbine section 34 because the debris can clog cooling passages and build upon impingement surfaces, thereby reducing the efficiency of heat transfer. Entrained particles that reach the hot sections of the turbine engine 20 tend to have a very small particle sizes because they have passed through the compressor section 30.

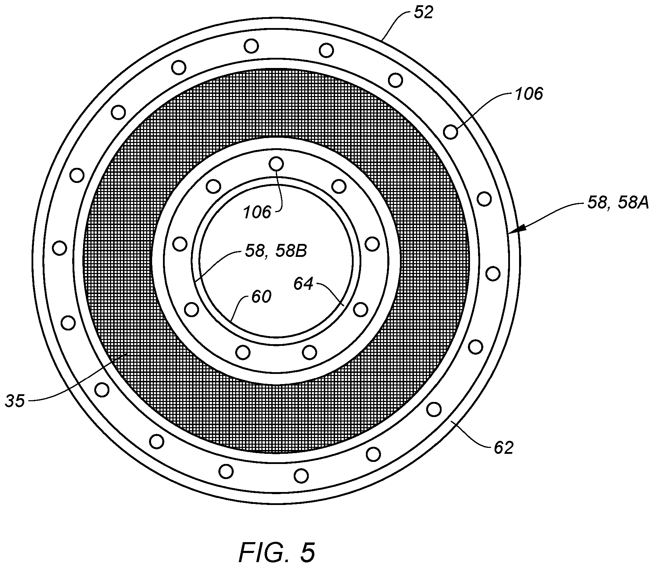

Referring to FIG. 2, the present disclosure includes a particle separator system that includes at least one particle separator 58 and a mechanism 96 for producing an electrostatically charged surface on the particle separator 58. Present disclosure particle separators 58 may be configured for use in a diffuser ID flow path 64 or in a diffuser OD flow path 62. FIG. 5 diagrammatically illustrates an end view of the particle separators 58 and the combustor 35, including an outer casing 52, a first particle separator embodiment 58A, a combustor 35, a second particle separator embodiment 58B, and an inner diffuser case 60. The combustor 35 is nested between the first particle separator 58A (disposed radially outside of the combustor 35) and the second particle separator 58B (disposed radially inside of the combustor 35).

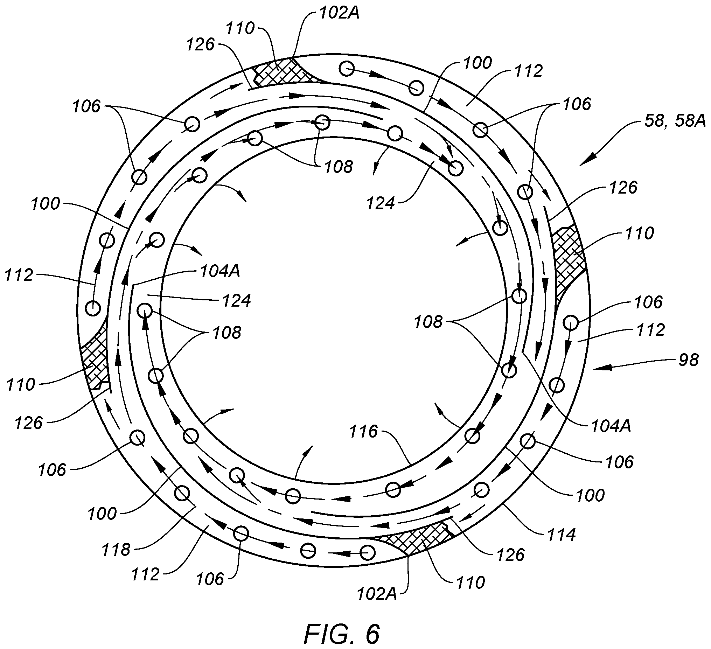

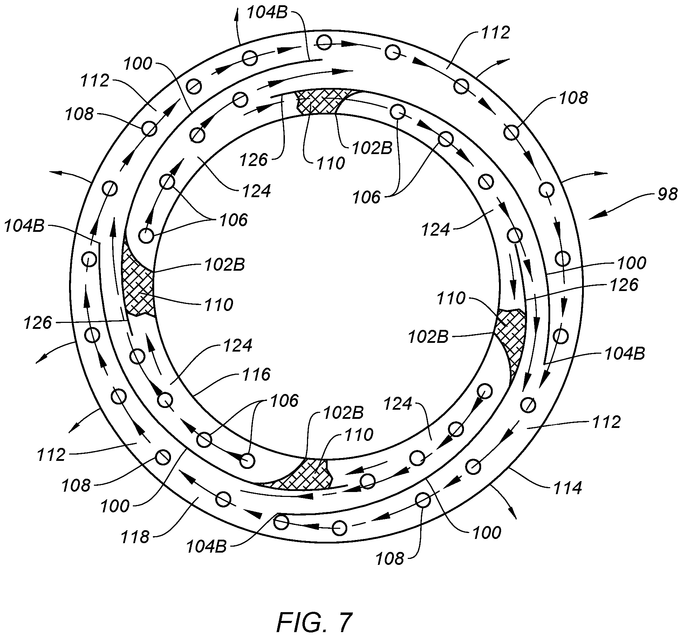

FIG. 6 diagrammatically illustrates a first example of a particle separator 58 ("first particle separator 58A") and FIG. 7 diagrammatically illustrates a second example of a particle separator 58 ("second particle separator 58B"). Each particle separator 58A, 58B includes a housing 98, a plurality of helical dividers 100, at least one inlet aperture 106, a plurality of exit apertures 108, and at least one debris collection pocket 110. The housing 98 includes an exterior wall 114, an interior wall 116, and a housing interior cavity 118 disposed between the exterior and interior walls 114, 116. The housing 98 extends between a forward end 120 and an aft end 122; see FIG. 2. Each helical divider 100 is a wall that extends axially between the housing forward and aft ends 120, 122. In FIGS. 6 and 7, the particle separators 58A, 58B are diagrammatically shown as having a substantially cylindrical housing 98. The present disclosure particle separators 58 are not limited to a cylindrical housing 98.

The first particle separator 58A shown in FIG. 6 includes a plurality of helical dividers 100, each having an outer wall end 102A and a distal end 104A. The outer wall end 102A is engaged with the housing exterior wall 114. The helical dividers 100 shown in FIG. 6 extend circumferentially and spiral radially inward. A portion of each helical divider 100 defines an outer passage 112 between the helical divider 100 and the exterior wall 114, and a portion of each helical divider 100 defines an inner passage 124 between the helical divider 100 and the interior wall 116. The distal end 104A of each helical divider 100 is spaced apart from the interior wall 116. Each collection pocket 110 may be defined by the housing exterior wall 114, the outer wall end 102A of a respective helical divider 100, and a pocket wall 126. Each collection pocket 110 includes an opening for receiving particulate debris from the outer passage 112 as will be detailed herein. Adjacent to the collection pocket 110, the outer passage 112 spirals inwardly, extending between the collection pocket 110 and the inner passage 124 before terminating at the distal end 104A of the helical divider 100.

In the particle separator 58A embodiment shown in FIG. 6, the inlet apertures 106 are in fluid communication with the outer passages 112 formed by the helical dividers 100. In some embodiments, it may be possible to utilize a single inlet aperture 106. The inlet apertures 106 are diagrammatically illustrated as circular openings that may be disposed at the forward end 120 (see FIG. 2) of the housing 98. The present disclosure is not limited to circular shaped inlet apertures 106. Any inlet aperture 106 configuration that provides a fluid communication path from outside of the particle separator 58A into the outer passages 112 may be used. In like manner, the present disclosure is not limited to inlet apertures 106 disposed at the housing forward end 120; e.g., in some embodiments inlet apertures 106 may extend through the housing exterior wall 114 into the outer passages 112.

In the particle separator 58A embodiment shown in FIG. 6, the exit apertures 108 are in fluid communication with the inner passages 124 formed by the helical dividers 100. The exit apertures 108 are diagrammatically illustrated as circular openings, but the present disclosure is not limited to circular apertures. Any configuration of an exit aperture 108 that provides a fluid communication path from a respective inner passage 124 to outside of the particle separator 58A (e.g., through the interior wall 116 and/or out the aft end 122 of the housing 98) may be used.

The second particle separator 58B shown in FIG. 7 includes a plurality of helical dividers 100, each having an inner wall end 102B and a distal end 104B. The inner wall end 102B is engaged with the housing interior wall 116. The helical dividers 100 shown in FIG. 7 extend circumferentially and spiral radially outward. A portion of each helical divider 100 defines an inner passage 124 between the helical divider 100 and the interior wall 116, and a portion of each helical divider 100 defines an outer passage 112 between the helical divider 100 and the exterior wall 114. The distal end 104B of each helical divider 100 is spaced apart from the exterior wall 114. Each collection pocket 110 may be defined by the housing interior wall 116, the inner wall end 102B of a respective helical divider 100, and a pocket wall 126, and each collection pocket 110 includes an opening for receiving particulate debris from the inner passage 124 as will be detailed herein. Adjacent to the collection pocket 110, the inner passage 124 spirals outwardly, extending between the collection pocket 110 and the outer passage 112 before terminating at the distal end 104B of the helical divider 100.

In the particle separator 58B embodiment shown in FIG. 7, the inlet apertures 106 are in fluid communication with the inner passages 124 formed by the helical dividers 100. In some embodiments, it may be possible to utilize a single inlet aperture 106. The inlet apertures 106 are diagrammatically illustrated as circular openings that may be disposed at the forward end 120 (see FIG. 2) of the housing 98. The present disclosure is not limited to circular shaped inlet apertures 106. Any inlet aperture 106 configuration that provides a fluid communication path from outside of the particle separator 58B into the inner passages 124 may be used. In like manner, the present disclosure is not limited to inlet apertures 106 disposed at the housing forward end 120; e.g., in some embodiments inlet apertures 106 may extend through the housing interior wall 116 and into the inner passages 124.

In the particle separator 58B embodiment shown in FIG. 7, the exit apertures 108 are in fluid communication with the outer passages 112 formed by the helical dividers 100. The exit apertures 108 are diagrammatically illustrated as circular openings, but the present disclosure is not limited to circular apertures. Any configuration of an exit aperture 108 that provides a fluid communication path from a respective outer passage 112 to outside of the particle separator 58B (e.g., through the housing exterior wall 114 to outside of the housing 98) may be used.

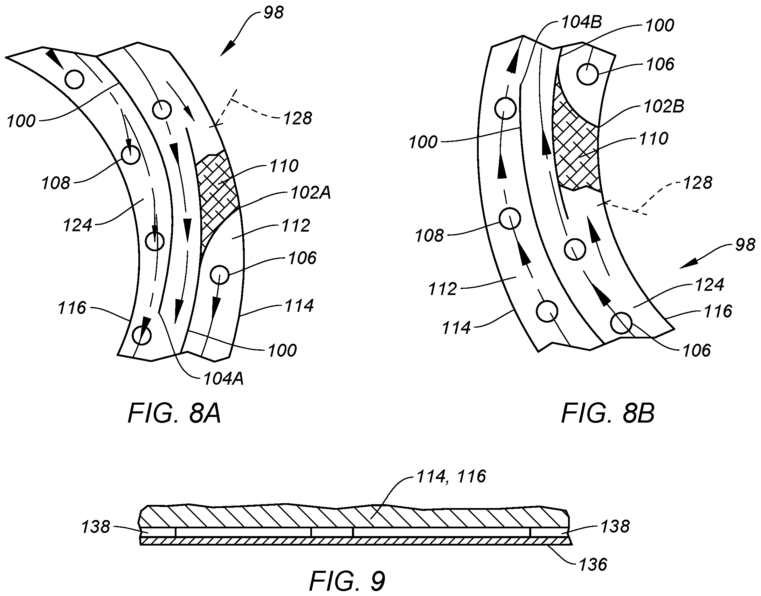

In some embodiments, the collection pockets 110 may be configured to permit access for removal of particulate debris. Collection pocket access may be accomplished in a variety of different ways. FIG. 8A diagrammatically illustrates an access port 128 disposed in the housing exterior wall 114 (e.g., for the separator 58A embodiment shown in FIG. 6) and FIG. 8B diagrammatically illustrates an access port 128 disposed in the housing interior wall 116 (e.g., for the separator 58B embodiment shown in FIG. 7). The present disclosure is not limited to any particular structure for providing access to the collection pockets 110.

The present disclosure is not limited to any particular mechanism 96 for producing an electrostatically charged surface on the particle separator 58. The mechanism 96 may include an power supply 130 that provides an electrical bias, voltage potential, or an electromagnetic field source, or the like. In some embodiments, the mechanism 96 may utilize electrical energy produced by a combustion ignitor 132 of the combustor section 32. Combustion igniters that produce a high voltage signal are well known. The mechanism 96 for producing an electrostatically charged surface may be in communication with a controller 134 configured to control the application of the electrostatic charge. For example, the mechanism 96 may be controlled between an "on mode" wherein the separator portion is electrostatically charged and an "off mode" wherein the separator portion is not electrostatically charged to prevent particle accumulation on the charged portion. The controller 134 may be configured to control and/or receive signals therefrom to perform the functions described herein. The controller 134 may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the system to accomplish the same algorithmically and/or coordination of system components. The controller 134 includes or is in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. Communications between the controller and other system components may be via a hardwire connection or via a wireless connection.

Particles entrained in air very often possess a static charge (positive or negative charge). The aforesaid static charge may result from contact between the particles and other objects; e.g., other particles and/or surfaces. The compressing work performed on the air by the compressor section 30 upstream of the combustor section 32 may increase the probability of entrained particles possessing a static charge. The compressing work may also decrease the percentage of particles having a relatively larger diameter and increase the percentage of particles having a relatively smaller diameter.

Present disclosure particle separators 58 are configured such that a portion of a particle separator 58 possesses an electrostatic charge continuously, intermittently, or selectively. The electrostatically charged portion of the particle separator 58 facilitates particle separation by attracting the particles in a predetermined direction for subsequent collection. In this manner, the air flow passing through the separator 58 that has been subjected to particle separation and collection is "cleaner" (i.e., less particulate matter) than the "dirty" air that entered the particle separator 58. The present disclosure is not limited to any particular portion of a separator 58 as the electrostatically charged surface. In the particle separator 58A embodiment shown in FIG. 6, the housing exterior wall 114 (or a portion thereof) is electrostatically charged and is electrically insulated from the remainder of the particle separator 58A. Alternatively (as diagrammatically shown in FIG. 9), one or more electrically conductive panels 136 may be attached to, and electrically insulated from (via insulators 138), the exterior wall 114 of the particle separator 58A, to function as the electrostatically charged surface. The polarity of the electrostatically charged surface may be chosen based on the polarity of particles entrained within the air flow.

In the particle separator 58B embodiment shown in FIG. 7, the interior wall 116 (or portion thereof) is electrostatically charged and is electrically insulated from the other components of the particle separator 58B. Here again, one or more electrically conductive plates may be attached to, and electrically insulated from, the interior wall of the particle separator 58B.

In the operation of a turbine engine 20 (e.g., see FIG. 1), air is drawn into the turbine engine 20 through an air flow inlet 24 and is typically directed through a fan section 28. The air flow exiting the fan section 28 enters the compressor section 30 where it is worked to a higher pressure and temperature. The compressed air exits the compressor section 30 and enters the combustor section 32. In many instances, the air that is worked within the compressor section 30 is unfiltered ambient air that contains entrained particles. Even if the air worked within the compressor section 30 has been filtered upstream, no filtration process (i.e., particle removement process) is perfect - some amount of particulate matter will remain entrained.

Entrained particulate matter can be particularly problematic in the combustor section 32 and the turbine section 34 where component cooling is required. In many applications, engine cooling schemes use relatively small diameter cooling apertures to produce impingement cooling and/or to establish cooling air boundary layer flow adjacent to a component surface, or the like. In these instances, the diameter of the cooling aperture may be directly related to the desired cooling effect. In some instances, the diameter of the cooling aperture is limited by the potential for particulate fouling; i.e., a minimum diameter of a cooling aperture is selected to avoid fouling and consequent cooling deficit.

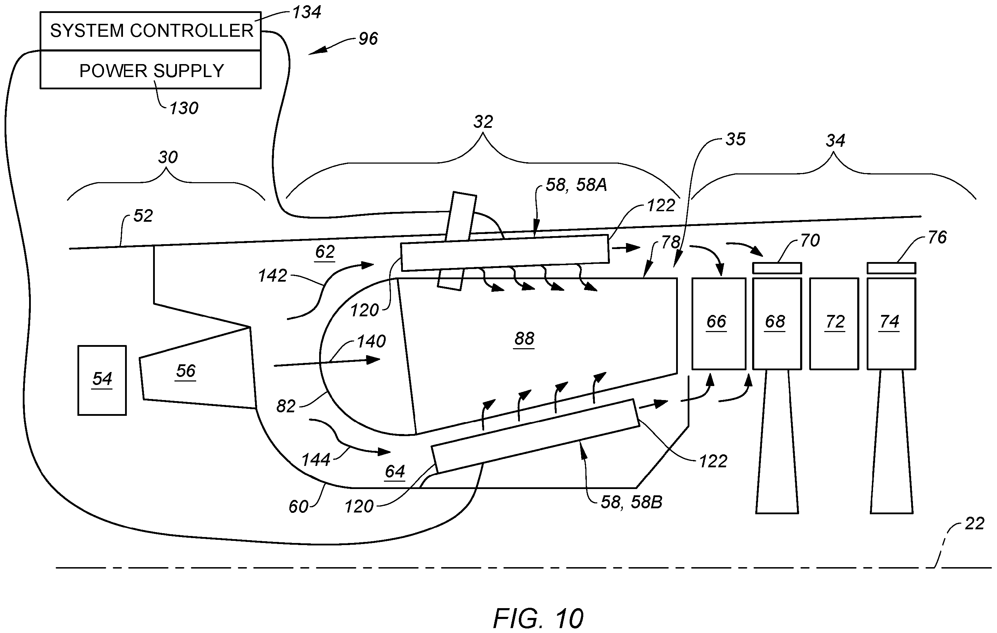

FIG. 10 diagrammatically illustrates air flow into, within, and exiting the combustor section 32 into the turbine section 34. FIG. 10 diagrammatically illustrates present disclosure particle separators 58A, 58B disposed within both the diffuser OD flow path 62 and the diffuser ID flow path 64. As indicated above, the present disclosure does not require disclosure particle separators 58 disposed in both the diffuser OD flow path 62 and the diffuser ID flow path 64. The air flow exiting the compressor discharge 56 enters the combustor section 32 as combustor primary flow 140, diffuser OD flow 142, and diffuser ID flow 144. The combustor primary flow 140 passes through the combustor bulkhead assembly 82 and is mixed with fuel and the mixture combusted. The air not utilized within combustion and the combustion products (collectively referred to hereinafter as "core gas flow") enters the turbine section 34 via the core gas flow path and provides motive force to drive the turbine section 34. The diffuser OD flow 142 enters the diffuser OD flow path 62 and the diffuser ID flow 144 enters the diffuser ID flow path 64. The air entering the combustor 35, the diffuser OD flow path 62, and the diffuser ID flow path 64 very likely contains entrained particulate matter; i.e., "dirty air". Depending on the present disclosure configuration, all or a portion of the dirty air entering the diffuser OD flow path 62 will enter the particle separator 58A disposed within the diffuser OD flow path 62, and all or a portion of the dirty air entering the diffuser ID flow path 64 will enter the particle separator 58B disposed within the diffuser ID flow path 64.

Referring to FIG. 6, dirty air flow is drawn in through inlet apertures 106 disposed adjacent the exterior wall 114 of the separator 58A. The separator 58A is configured to direct the air flow spirally toward the exit apertures 108. This separator 58A embodiment leverages the fact that the inlet airflow is adjacent the exterior wall 114 by electrostatically charging all or portions of the exterior wall 114 (or electrically conductive panels 136 attached to the exterior wall 114). Hence, as the airflow passes within the separator 58A in close proximity to the exterior wall 114, charged particles entrained within the air will be attracted to the electrostatically charged exterior wall 114. The present disclosure system may be controlled to continuously, intermittently, or selectively electrostatically charge all or portions of the exterior wall 114. The collection pockets 110 are disposed adjacent to the exterior wall 114, positioned to capture and collect particulate matter. As indicated above, the mechanism 96 (see FIGS. 2 and 10) for producing an electrostatically charged surface may be controlled to be in an on mode or an off mode. When the mechanism 96 is in an on mode, particles not adhered to the charged surface but drawn towards the charged surface may be captured within the collection pockets 110. When the mechanism 96 is in an off mode, particles may release from the charged surface and be drawn into the collection pockets 110 as they travel with the air flow. The spiral configuration of the helical dividers 100 assist in the desired outward particle movement by causing centrifugal forces to act on the particles.

Still referring to FIG. 6, the air flow that continues to travel axially and spirally within the particle separator 58A will be "cleaner" air relative to the air that entered the particle separator 58A. The exit apertures 108 of the particle separator 58A may be configured to allow the clean air to exit the particle separator 58A along the axial length of the separator 58A (adjacent the combustor 35 - i.e., adjacent the outer combustor wall assembly 78 as shown in FIG. 3) and/or at the aft end 122 of the separator 58A.

Referring to FIG. 7, dirty air flow is drawn in through inlet apertures 106 disposed adjacent the interior wall 116 of the separator 58B. The separator 58B is configured to direct the air flow spirally toward the exit apertures 108. This separator 58B embodiment leverages the fact that the inlet airflow is adjacent the interior wall 116 by electrostatically charging all or portions of the interior wall 116 (or electrically conductive panels 136 attached to the interior wall 116). Hence, as the air flow passes within the separator 58B in close proximity to the interior wall 116, charged particles entrained within the air will be attracted to the electrostatically charged interior wall 116. The present disclosure system may be controlled to continuously, intermittently, or selectively electrostatically charge all or portions of the interior wall 116. The collection pockets 110 are disposed adjacent to the interior wall 116, positioned to capture and collect particulate matter. As indicated above, the mechanism 96 (see FIGS. 2 and 10) for producing an electrostatically charged surface may be controlled to be in an on mode or an off mode. When the mechanism 96 is in an on mode, particles not adhered to the charged surface but drawn towards the charged surface may be captured within the collection pockets 110. When the mechanism 96 is in an off mode, particles may release from the charged surface and be drawn into the collection pockets 110 as they travel with the air flow.

Still referring to FIG. 7, the air flow that continues to travel axially and spirally within the particle separator 58B will be "cleaner" air relative to the air that entered the particle separator 58B. The exit apertures 108 of the particle separator 58B may be configured to allow the clean air to exit the particle separator 58B along the axial length of the separator 58B (adjacent the combustor 35 - i.e., adjacent the inner combustor wall assembly 80 as shown in FIG. 3) and/or at the aft end 122 of the separator 58B.

Referring to FIGS. 2 and 10, clean air exiting the particle separator 58 disposed in the diffuser OD flow path 62 may be used to cool the combustor 35 and/or be used to cool the HPT components including, but not limited to, the first HPT stator vane stage 66, the first HPT rotor stage 68, the first HPT rotor BOAS 70, the second HPT stator vane stage 72, the second HPT rotor BOAS 76, and the like (see FIGS. 2 and 8). The clean air produced by the present disclosure particle separators 58 decreases the potential for fouling and therefore increase the likelihood of successful HPT component cooling over a greater period of time.

Embodiments of the present disclosure particle separator 58 that are configured to separate entrained particles both electrostatically and centrifugally are understood to provide a substantial improvement in particle separation. As stated above, the work performed on the air passing through the compressor section 30 is understood to increase the percentage of the entrained particles having a relatively smaller diameter and decrease the percentage of entrained particles having a relatively larger diameter. The present disclosure particle separator 58 embodiments that employ a combination of centrifugal and electrostatic separation are understood to be effective at removing both larger entrained particles (more susceptible to centrifugal forces) and smaller particles (less susceptible to centrifugal forces, but more apt to have a particular electrostatic charge). It is understood that not all entrained particles will have the same electrostatic charge. It is understood further that "small" particles (i.e., those having a diameter / hydraulic diameter less than fifty microns - 50µm) typically possess a negative charge and "large" particles (i.e., those having a diameter / hydraulic diameter greater than fifty microns - 50µm) typically possess a positive charge.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. A turbine engine (20) having an axial centerline (22), the turbine engine (20) comprising:
a compressor section (30);
a combustor section (32) having an annular combustor (35);
an outer casing (52) disposed radially outside of and spaced apart from the annular combustor (35), wherein a diffuser outer diameter (OD) flow path (62) is disposed radially between the outer casing (52) and the annular combustor (35);
an inner diffuser case (60) disposed radially inside of and spaced apart from the annular combustor (35), wherein a diffuser inner diameter (ID) flow path (64) is disposed radially between the annular combustor (35) and the inner diffuser case (60);
a turbine section (34);
a particle separator (58, 58A, 58B) disposed within at least one of the diffuser OD flow path (62) or the diffuser ID flow path (64), wherein the particle separator (58, 58A, 58B) includes a housing (98) having an interior cavity (118) defined between an exterior wall (114) and an interior wall (116), the housing (98) extending between a forward end (120) and an aft end (122), a plurality of helical dividers (100) disposed within the interior cavity (118), at least one collection pocket (110), at least one inlet aperture (106), and a plurality of exit apertures (108); and
a mechanism (96) configured to produce an electrostatically charged surface on a portion of the particle separator (58, 58A, 58B);
wherein the particle separator (58, 58A, 58B) is configured so that an air flow enters the particle separator interior cavity (118) through the at least one inlet aperture (106) and enters a first passage defined by a respective helical divider (100) and the electrostatically charged surface before exiting through the exit apertures (108);
wherein the at least one collection pocket (110) is in fluid communication with the first passage and is disposed to receive particulate matter entrained within the air flow.

2. The turbine engine (20) of claim 1, wherein the first passage is defined by a first said helical divider (100) and the electrostatically charged surface, and the particle separator (58, 58A, 58B) includes a second passage defined by a second said helical divider (100) and the housing interior wall (116) or the housing exterior wall (114).

3. The turbine engine (20) of claim 2, wherein the housing exterior wall (114) is disposed radially outside of the housing interior wall (116).

4. The turbine engine (20) of claim 3, wherein the housing exterior wall (114) and the housing interior wall (116) are concentric.

5. The turbine engine (20) of claim 3 or 4, wherein the first said helical divider (100) and the second said helical divider (100) each have an outer wall end (102A, 102B) and a distal end (104A, 104B), and the respective outer wall ends (102A, 102B) of the first said helical divider (100) and the second said helical divider (100) are each connected to the housing exterior wall (114).

6. The turbine engine (20) of claim 5, wherein the at least one collection pocket (110) includes a first collection pocket (110) disposed adjacent the outer wall end (102A) of the second said helical divider (100).

7. The turbine engine (20) of claim 6, wherein the distal end (104A, 104B) of the first said helical divider (100) is disposed radially inside of and spaced apart from the first collection pocket (110).

8. The turbine engine (20) of claim 7, wherein the distal end (104A, 104B) of the first said helical divider (100) is spaced apart from the housing interior wall (116).

9. The turbine engine (20) of any preceding claim, wherein the electrostatically charged surface is at least a portion of the housing exterior wall (114),
wherein, optionally, the mechanism (96) configured to produce an electrostatically charged surface is in communication with a combustor igniter.

10. The turbine engine (20) of any preceding claim, wherein the first passage is defined by a first said helical divider (100) and the electrostatically charged surface portion of the housing exterior wall (114), and the particle separator (58, 58A, 58B) includes a second passage defined by a second said helical divider (100) and the housing interior wall (116).

11. The turbine engine (20) of claim 10, wherein:
one or more of the exit apertures (108) extends through the exterior wall (114); and/or
one or more of the exit apertures (108) is disposed at the aft end (122) of the housing (98).

12. The turbine engine (20) of any preceding claim, wherein the first passage is defined by a first said helical divider (100) and the electrostatically charged surface portion of the housing interior wall (116), and the particle separator (58, 58A, 58B) includes a second passage defined by a second said helical divider (100) and the housing exterior wall (114), and the housing exterior wall (114) is disposed radially outside of the housing interior wall (116).

13. The turbine engine (20) of claim 12, wherein the first said helical divider (100) and the second said helical divider (100) each have an outer wall end (102A, 102B) and a distal end (104A, 104B), and the outer wall ends (102A, 102B) of the first said helical divider (100) and the second said helical divider (100) are each connected to the housing interior wall (116).

14. The turbine engine (20) of claim 13, wherein the at least one collection pocket (110) includes a first collection pocket (110) disposed adjacent the outer wall end (102A) of the second said helical divider (100), wherein, optionally:
the first collection pocket (110) is in fluid communication with the first passage; and/or
the distal end (104A, 104B) of the first said helical divider (100) is disposed radially outside of and spaced apart from the first collection pocket (110).

15. A particle separator system configured for use within a combustor section (32) of a turbine engine (20), comprising:
a particle separator (58, 58A, 58B) that includes:
a housing (98) having an interior cavity (118) defined between an exterior wall (114) and an interior wall (116), the housing (98) extending between a forward end (120) and an aft end (122);
a plurality of helical dividers (100) disposed within the interior cavity (118);
at least one collection pocket (110) disposed within the interior cavity (118);
at least one inlet aperture (106);
a plurality of exit apertures (108); and
a mechanism (96) configured to produce an electrostatically charged surface on a portion of the particle separator (58, 58A, 58B);
wherein the particle separator (58, 58A, 58B) is configured so that an air flow enters the particle separator interior cavity (118) through the at least one inlet aperture (106) and enters a first passage defined by a respective helical divider (100) and the electrostatically charged surface before exiting through the exit apertures (108);
wherein the at least one collection pocket (110) is in fluid communication with the first passage and is disposed to receive particulate matter entrained within the air flow.
